Europäisches Patentamt

European Patent Office

Office européen des brevets

(19)

(11) EP 1 376 381 A1

(12) **EUROPEAN PATENT APPLICATION**

(43) Date of publication:
**02.01.2004 Bulletin 2004/01**

(51) Int Cl.7: **G06F 17/17**, G06T 3/40

(21) Application number: **03100308.0**

(22) Date of filing: **12.02.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(71) Applicant: **Agilent Technologies Inc**
**Palo Alto, CA 94303-0870 (US)**

(72) Inventor: **Patten, Peter**
**71034, Boeblingen (DE)**

(74) Representative: **Barth, Daniel et al**
**c/o Agilent Technologies Deutschland GmbH,
Patentabteilung,
Herrenbergerstrasse 130
71034 Böblingen (DE)**

(54) **Method and system for data sampling**

(57) The invention relates to the determination of a physical property as a function of a n-dimensional domain, with n being a natural number. Values of said physical property correspond to vertices of a n-dimensional first grid that represent the domain. For a set of cells of said first grid, at least one inner point per cell is determined, whereby said inner points, together with the vertices of the first grid, form a respective second grid. Then, for each of said inner points, a corresponding value of the physical property at said inner point is determined, whereby in case a predefined criterion is not fulfilled, said value at the inner point is obtained by performing a measurement.

EP 1 376 381 A1

## Description

BACKGROUND OF THE INVENTION

The present invention relates to the determination of a physical property as a function of a multidimensional domain.

Whenever a physical property is determined in dependence on a n-dimensional parameter space, with n being a natural number, it is necessary to record a large number of measurement points before the behavior of said physical property is known. For example, in order to measure said optical property at $n_1$ different values of a first parameter, at $n_2$ different values of a second parameter, and of $n_3$ different values of a third parameter, as many as $n_1 \times n_2 \times n_3$ different measurements have to be performed.

SUMMARY OF THE INVENTION

It is an object of the invention to improve the determination of a physical property as a function of an n-dimensional domain, with n being a natural number. The object is solved by the independent claims. Preferred embodiments are shown by the dependent claims.

According to the invention, a physical property is determined as a function of an n-dimensional domain, whereby values of said physical property correspond to vertices of an n-dimensional first grid representing the domain. The method comprises a first step of determining, for a set of cells of said first grid, at least one inner point per cell. Together with the vertices of the first grid, said inner points form a respective second grid. Then, for each of said inner points, a corresponding value of the physical property at said inner point is determined, whereby in case a predefined criterion is not fulfilled, said value at the inner point is obtained by performing a measurement.

Not for every new inner point, a measurement has to be performed. By means of the predefined criterion, it is possible to determine regions where it is not required to perform measurements. On the other hand, in case said criterion is not fulfilled, then the respective region is a region of interest that has to be examined more closely. For example, the physical property might show a characteristic behavior in said region.

Preferred embodiments of the invention allow recording the behavior of a physical property as a function of a multidimensional parameter space with a reduced number of measurements, whereby the predefined criterion allows focusing the measurements on those regions where the behavior is most characteristic. The total measurement time for acquiring the measurement points is considerably reduced, and in many cases, the behavior of the physical property in dependence on the underlying multidimensional parameter space can be obtained quickly. Whenever a device under test (DUT), for example an integrated circuit or an optical component, is subjected to a time-consuming measurement that comprises the acquisition of hundreds or thousands of measurement points, then these measurements might lead to a deterioration of the DUT. The invention allows reducing the impact of the measurement on the DUT.

Preferred embodiments of the invention might for example be applied in the field of medical technology, and in particular, in the field of multidimensional medical imaging techniques that are e.g. based on NMR or on x-rays. Making use of the invention, it is possible to reduce the number of measurements required for acquiring a multidimensional array of data having a predefined resolution. Here, the invention allows to significantly reducing the radiation exposure of the patient.

According to a preferred embodiment, in case said criterion is fulfilled, said value at the at least one inner point is obtained by interpolation. Instead of deriving the value of the physical property at the new inner point by means of a measurement, said value is derived analytically from other values of the physical property. For example, it might be advantageous to assign some kind of intermediate value to the inner point. Thus, it is possible to replace a time consuming measurement by a calculation.

According to a preferred embodiment of the invention, only known values of the physical property in the immediate neighborhood of the new inner point are used for the interpolation procedure. For example, one might use the values of the physical property at the vertices of the cell that surrounds said inner point as a starting point for the interpolation procedure. Because only a few values have to be considered, the calculation time is further reduced. For example, in case of an n-dimensional grid, only the values of the physical property at the next neighbor sites have to be considered. As a result, an additional speed-up is achieved.

According to another preferred embodiment of the invention, the vertices of said cells are at the same time vertices of said first grid. This implies that, when the values of the physical property at the vertices of the first grid are known, the values of the physical property at the corners of said cells are known as well. Therefore, all the values required for deriving the value at an inner point of said cell are known.

In another preferred embodiment of the invention, said cells are elementary cells of the first grid. An elementary cell is the smallest cell of which said first grid can be composed. By determining inner points of said elementary cells, the first grid can be refined in a very regular manner. According to another preferred embodiment, said inner points are at the same time the central points of the cells. The second grid therefore comprises both the corner points and the central points of the cells of the first grid. The step of adding the cells' central points to the first grid might e.g. be repeated several times. In this case, a continuous refinement of the grid structure is achieved.

The above-mentioned criterion allows distinguishing regions where measurements are required from other regions where an interpolation is sufficient. According to a preferred embodiment of the invention, said criterion is fulfilled (which means that the new value is obtained by interpolation) if the values of the physical property at the vertices of the surrounding cell are not too far apart from each other. The fact that the values at the vertices are close together implies that said values rather define a plateau region than a region where a significant change of said physical property occurs. Within the plateau region, a value obtained by interpolation is sufficiently close to the corresponding real value of the physical property.

According to a first preferred embodiment for setting up the criterion, the criterion is fulfilled in case the value of the physical property is substantially the same at all the vertices of the surrounding cell. If at least one of said values differs from the other values, a measurement is performed. This mode of operation will further on be referred to as the "optimized mode". Only in case the values at all neighbor vertices of the new inner point are equal to each other, the value at said inner point is obtained by interpolation. Preferably, in this case, the common value of the vertices of the surrounding cell is assigned to the at least one inner point of said cell.

According to a further preferred embodiment of the invention, it is determined, for each one of the values at the vertices of a corresponding cell, whether the respective value is a minimum value, an intermediate value or a maximum value of the value range. For each value at a neighbor vertex of the new inner point, a corresponding "quality" of said value is identified: said value can either be a minimum value, an intermediate value or a maximum value.

This leads to a second preferred embodiment for setting up said criterion. According to this second embodiment, the criterion is fulfilled if all the values of the physical property at the vertices of the surrounding cell are minimum values, or if all said values are intermediate values, or if all said values are maximum values. According to this mode of operation, measurements are performed at the contour between the region of maximum values and the region of intermediate values, because at this contour, the values have different qualities. Also at the contour between the region of intermediate values and the region of minimum values, measurements are performed. For this reason, the corresponding mode of operation will further on be referred to as the "contour mode". Compared to the "optimized mode" that has been described above, the "contour mode" only requires a very small number of measurements, and therefore, the total measurement time can be further reduced.

According to another embodiment of the present invention, the interval of possible values of the physical property is segmented into a set of m sub-intervals, with $m \geq 2$ being a natural number. This embodiment provides the most general rule for assigning a certain quality to a certain value of the physical property. Both the number m of sub-intervals and the respective lengths of the sub-intervals can be adapted to the behavior of the respective physical property.

Once the range of values has been segmented into a set of sub-intervals, a corresponding criterion for determining whether or not to perform a measurement can be derived. According to a third preferred embodiment for setting up said criterion, the criterion is fulfilled if all the values of the physical property at the vertices of the cell that contains a certain new vertex lie within the same sub-interval. Alternatively, said criterion can be modified by requiring that only a certain number of values have to lie within the same sub-interval.

According to a further preferred embodiment of the invention, the interpolation is performed in a way that a mean value of the values at the vertices of the corresponding cell is assigned to the at least one inner point of said cell. For example, said mean value can be obtained by calculating the arithmetic means of the values at vertices of the surrounding cell.

According to a further preferred embodiment of the invention, a flag is maintained for each vertex that indicates if the value at said vertex has been obtained by interpolation or by measurement. Based on these flags, two different display modes can be selected. According to a first display mode, only the values that have been measured are shown. According to a second display mode, both the values that have been measured and the values that have been obtained by interpolation are displayed.

According to a further preferred embodiment of the invention, the mode of operation can be switched to a mode in which, for one or more of the inner points, and irrespective of said criterion, a measurement is performed. According to this so-called "extensive mode", e.g., no interpolation at all might be performed. This mode allows detecting any deviations between the interpolated and the measured results.

Preferably, said first grid is refined at least once by determining at least one inner point per cell. According to a further preferred embodiment, the step of refining the grid is iteratively repeated a number of times until a resolution defined by the user is reached. By adding new inner points to the existing vertices of the grid, the spacing between next neighbors is decreased with each iteration. By repeating this refinement process, any desired resolution can be achieved.

The method according to an embodiment of the present invention might for example be applied for testing or characterizing a device under test, for testing or characterizing integrated circuits, e.g. for determining bit error rate distributions. For example, an embodiment of the present invention might be useful for determining a statistical distribution of the bit error rates of a single input-output channel, or for determining bit error rate distributions for a whole set of input/output channels.

According to a preferred embodiment, a so-called "eye diagram" is determined, whereby the physical property is the number of fails. For example, said number of fails might be determined as a function of a two-dimensional grid. On the first coordinate axis, the timing of the receive strobes might be detracted. On the second coordinate axis, the respective threshold voltage that is used for digitizing the received bit stream might be indicated.

The invention can be partly or entirely embodied or supported by one or more suitable software programs, which can be stored on or otherwise provided by any kind of data carrier, and which might be executed in or by any suitable data processing unit. Software programs or routines are preferably applied in any kind of complex measurement systems that acquire large arrays of multidimensional data.

BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).

Fig. 1      shows how a multidimensional grid can be iteratively refined;

Fig. 2      depicts how the value E at an inner point of a cell can be derived from the values A, B, C, D at the vertices of the surrounding cell;

Fig. 3      shows how an output signal of a device under test is analyzed by means of a series of receive strobes;

Fig. 4      shows an eye diagram that has been determined according to the "extensive mode";

Fig. 5      shows the measured values of an eye diagram that has been acquired according to the "optimized mode";

Fig. 6      shows the eye diagram of Fig. 5, whereby both the values obtained by measurement and by interpolation are displayed;

Fig. 7      shows an eye diagram acquired according to the "contour mode"; and

Fig. 8      shows the eye diagram of Fig. 7, whereby both the values obtained by measurement and by interpolation are displayed.

DETAILED DESCRIPTION OF EMBODIMENTS OF THE INVENTION

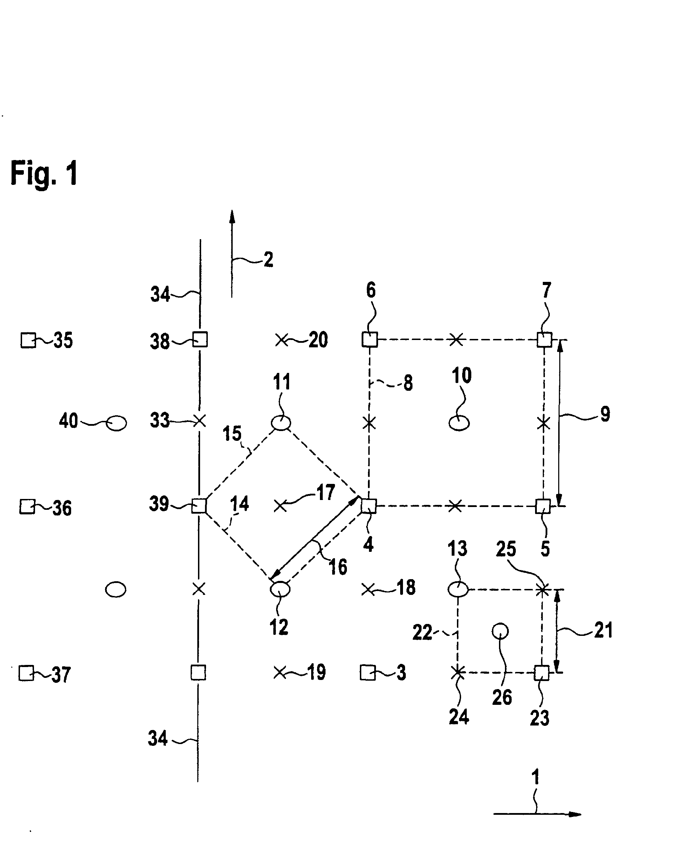

In Fig. 1, a 2-dimensional grid is shown, whereby the x-axis 1 corresponds to a first parameter, and whereby the y-axis 2 corresponds to a second parameter. Each vertex of said grid, for example the vertex 3, corresponds to a certain pair of values of said first and said second parameter. The aim is to determine the dependence of a physical property on said first and said second parameter. The invention is not limited to physical properties depending on two parameters. The respective physical property might as well depend on one, three, four, etc. parameters, and correspondingly, these parameters might be represented in a one-dimensional, three-dimensional or four-dimensional grid, whereby a value of the respective physical property is assigned to each vertex of the respective grid.

In the following, the discussion will be carried out with respect to the two-dimensional example shown in Fig. 1. It is assumed that for each of the vertices 3, 4, 5, 6, 7, etc. indicated by little squares, a corresponding value of said physical property is known. In the following, a technique of iteratively refining the initial grid of Fig. 1 will be explained. "Refining a grid" shall mean to decrease the spacing between neighbor vertices by adding additional points to the respective grid. The number of vertices is increased, and by doing this, the resolution of the measurement points is improved. As a starting point, a first grid comprising the vertices indicated as little squares is considered. In Fig. 1, a cell 8 of the first grid is shown, whereby the vertices 4, 5, 6, 7 of the first grid form the corners of the cell 8. In Fig. 1, the cell 8 is an elementary cell of the first grid, which means that it is the smallest possible cell that can be formed from the vertices of said first grid. The cell 8 doesn't have to be an elementary cell of the first grid, though. Any other cell can be chosen as well, provided that it is possible to partition the respective n-dimensional domain (in Fig. 1, a 2-dimensional domain) into cells of the respective type. The lattice constant 9 of the first grid is also depicted in Fig. 1.

In order to refine the first grid, at least one inner point per cell is determined and said inner points are added, as new vertices, to the vertices of said first grid. In cell 8, for example, a new vertex 10 is added to the vertices of the first grid. The new vertex 10 is the central point of the cell 8, but any other inner point could be selected as well. In Fig. 1, the new vertices 10, 11, 12, 13 are indicated as black circles. These new vertices, together with the vertices of the first grid that are indicated as squares, form a respective second grid. An elementary cell 15 of said second grid, which comprises two vertices 4, 14 of the first grid and two new vertices 11, 12, is indicated in Fig. 1. When comparing the lattice constant 16 of said second grid with the lattice constant 9 of the first grid, it can be seen that the spacing between next neighbors has been decreased by the factor $1/\sqrt{2}$.

For each one of the new vertices 10, 11, 12, 13, a corresponding value of the physical property has to be determined. This can e.g. be done by recording a respective measurement value. According to the present invention, measurements of the physical property are only performed for a subset of the new vertices, whereby for the remaining new vertices, the corresponding values of the physical property are determined in a different way, e.g. by interpolating between known values. For example, the value of the physical property attached to the new vertex 10 might be derived from values at the surrounding vertices 4, 5, 6, 7 of the encompassing elementary cell 8. For each of the new vertices, a predefined criterion is evaluated, and in accordance with said criterion, it is decided whether a measurement value should be recorded, or whether the corresponding value should be determined by interpolating between known values. More details about how said criterion can be set up, and how the interpolation process can be performed will be described later.

The second grid comprises both the vertices indicated as squares and the vertices indicated as black circles. In order to further refine the second grid, said second grid is partitioned into cells, and for each cell, at least one inner point is determined. These inner points are added, as new vertices, to the second grid. For example, within a cell 15, a new vertex 17 is determined, which might for example be the central point of the cell 15. In the same way, the new vertices 18, 19, 20 are obtained. In Fig. 1, the new vertices are indicated as little crosses.

The third grid that has been determined so far comprises the vertices indicated as squares, as black circles and as crosses. When comparing the lattice constant 21 of the third grid with the lattice constant 16 of the second grid, it can be seen that the resolution has been improved by $1/\sqrt{2}$ again. Each of the new vertices indicated as small crosses (for example the vertices 17, 18, 19, 20) has to be related to a corresponding value of the physical property. For each of said new vertices, for example for the vertex 17, said predefined criterion is evaluated, and it is determined whether the value of the physical property corresponding to the new vertex 17 should be acquired by measurement or by interpolation.

Until now, two iterations of the refinement process have been performed, and as a result, a third grid with a lattice constant 21 has been obtained. The process of iteratively refining the grid can be continued until a desired resolution is reached. For example, if the spacing 21 between next neighbors still is too large, one might partition the third grid into a set of cells and determine inner points of said cells. For example, the vertices 13, 23 of the second grid and the new vertices 24, 25 of the third grid form a cell 22, and within the cell 22, an inner point 26 might be determined as a new vertex. In this way, the refinement process can be continued until the spacing between next neighbors is smaller than a predefined threshold.

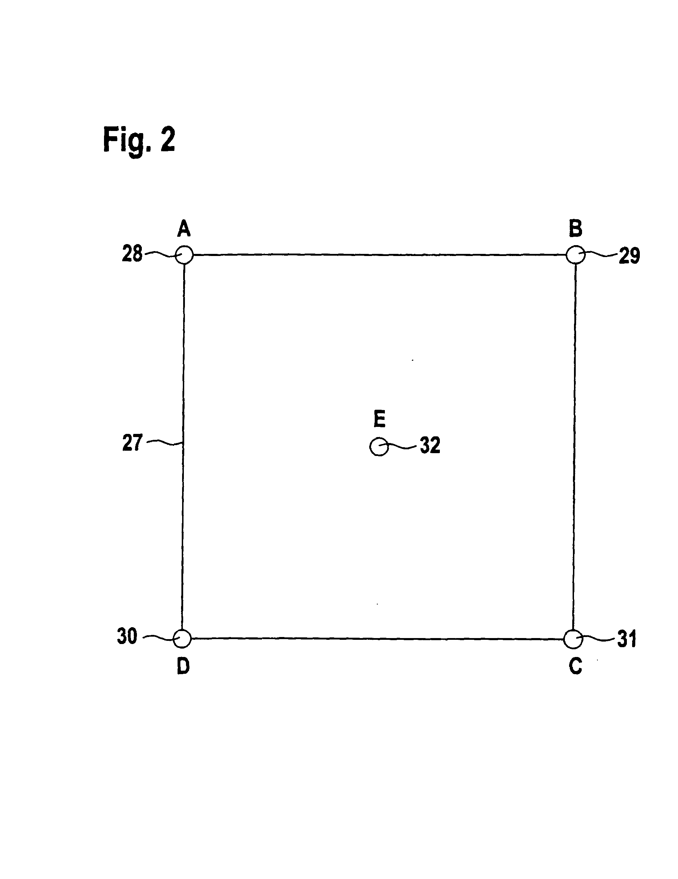

In Fig. 2, an elementary cell 27 of a 2-dimensional grid is shown, whereby said elementary cell 27 comprises four vertices 28, 29, 30, 31. The values A, B, C, D of the physical property, which correspond to said vertices 28, 29, 30, 31, are already known. When a new vertex 32 located within the cell 27 is added to the grid, the value E of the physical property at said new vertex 32 has to be determined, either by measurement or by interpolation. First of all, a criterion has to be evaluated that allows deciding whether a measurement is required or not. In case a direct measurement of E is not necessary, then the value E has to be derived from the known values A, B, C, D by means of an interpolation procedure. In this case, it is necessary to define how the interpolation should be carried out, and to express the value E in terms of values of said physical property that are already known.

In the following, several different embodiments for defining the criterion and for carrying out the interpolation process will be discussed, whereby the explanation will refer to the example shown in Fig. 2. It has to be stressed, though, that the respective criteria and interpolation schemes can be used with any n-dimensional grid structure, with n being an arbitrary natural number. Besides that, these embodiments are not limited to the case of the cell 27 being an elementary cell.

According to a first embodiment of the invention, said criterion comprises a step of checking whether the four values A, B, C, D of the physical property at the vertices of the corresponding cell are all equal to each other or not. In case any one of said values is not equal to any other one of said values, a measurement has to be performed for determining the value E of the physical property at the new vertex 32. Only in case A = B = C = D is true, or in case said four values A, B, C, D are at least substantially equal to each other, a measurement is not required. In this case, the common value A at the vertices 28, 29, 30, 31 is assigned, as a value E, to the new vertex 32. When all the values at surrounding vertices are of the same value, it can be assumed that there is a kind of plateau. The underlying assumption is that the respective physical property is a continuous function of the respective parameters and that there is no irregular or discontinuous behavior.

The mode of operation according to the first embodiment will further on be referred to as the "optimized mode". The "optimized mode" that has been explained so far can e.g. be implemented as an operational mode of a data acquisition system.

Of course, the above-mentioned criterion that the values at all of the surrounding vertices have to be identical (or at least substantially identical) can be softened. For example, one might require that at least three of the four values at the four vertices 28, 29, 30, 31 have to be identical in order to assign said value to the new vertex 32. Additionally, one might require that the fourth value is not to far from the other three values.

According to a second embodiment of the invention, which will also be explained with regard to Fig. 2, the values at the vertices of the surrounding cell are related to certain "qualities", and instead of comparing the values themselves, the respective qualities of said values are compared. In case said qualities are not identical, the value at the new vertex 32 within the cell 27 has to be determined by measurement. Otherwise, in case the respective qualities at the vertices 28, 29, 30, 31 are identical, the value at the new vertex 32 can be obtained by interpolating between the values A, B, C, D at the vertices of the surrounding cell 27. The value E might e.g. be set to the arithmetical means of the values A, B, C, D:

$$E = \frac{1}{4}(A + B + C + D)$$

The meaning of said "qualities" will become clear by means of the following example. One might e. g. determine, for each of the values A, B, C, D, whether the respective value is a minimum value, an intermediate value or a maximum value of the range of possible values of said physical property. To each of the values A, B, C, D, a corresponding quality ("minimum value", "intermediate value", "maximum value") is assigned. Next, the qualities assigned to the vertices of the cell 27 are compared. In case different qualities have been assigned to the vertices of the surrounding cell, a measurement should be performed for determining the value E. In case the qualities of the values A, B, C, D are identical, a measurement is not required, and E can be obtained by interpolation. In case all four values A, B, C, D are equal to the minimum value, then all these values have the same quality, and therefore, the criterion is fulfilled. Therefore, a measurement does not have to be performed, and the value E is set to the minimum value, too. The criterion is also fulfilled in case all four values A, B, C, D are "maximum values". Also in this case, a measurement is not necessary, and the value E is set to the maximum value.

In case none of the four values A, B, C, D is a minimum or a maximum value, then these four values have the common quality "intermediate value". The criterion is fulfilled, and therefore, the value E is obtained by interpolation. For example, one might assign the arithmetical means of A, B, C, D to the value E:

$$E = \frac{1}{4}(A + B + C + D)$$

As a consequence, the value E also is an "intermediate value". The mode of operation corresponding to the second embodiment of the invention will further on be referred to as the "contour mode", because it outlines the contours between the region of minimum values, the region of intermediate values, and the region of maximum values. From the above, it is clear that measurements are only performed if some of the values at the vertices of cell 27 are minimum values while other values are intermediate values, or if some of the values are intermediate values while other values are maximum values. As a consequence, only a few measurements have to be carried out. The rest of the values is derived by interpolation.

As a generalization of the above concept of "qualities" assigned to the respective values of said physical property, one can partition the value range I of said physical property into a set of m sub-intervals $I_1$, $I_2$, ... $I_m$, whereby $m \geq 2$ is a natural number. Now, the criterion for determining whether or not to perform a measurement can be set up as follows: in case the values A, B, C, D lie within the same sub-interval $I_j$

$$A, B, C, D \in I_j \quad 1 \leq j \leq m$$

then the value E at the new vertex 32 is obtained by interpolation. In case at least two of said four values A, B, C, D lie within different sub-intervals, for example

$$B \in I_j \quad D \in I_k \quad 1 \leq j, k \leq m \, j \neq k$$

then a measurement has to be performed. The way the interval I is partitioned into sub-intervals $I_1$, $I_2$, ... $I_m$ can be adapted to the respective physical property that is measured, in particular to the probability distribution of the various values of said physical property, to the desired accuracy, etc.

In case one wants to verify the results obtained by interpolation, a so-called "extensive mode" can be selected. When this mode is selected, then each value of the physical property corresponding to a new vertex is determined by measurement, irrespective of any criterion.

When the value of the physical property that corresponds to a new vertex is determined by interpolation, all the values at neighbor vertices of the surrounding cell should be considered. In case the new vertex is a boundary point, for example the point 33, which is located at the boundary 34 of the parameter space, this might not be possible, though. For a boundary point, there do not exist enough neighbor vertices. One solution to this problem might be to introduce virtual vertices, for example the virtual vertices 35, 36, 37 shown on the left side of the boundary 34 in Fig. 1. The values of the physical property at the virtual vertices can e.g. be determined by measuring the value at a corresponding boundary vertex instead. For example, the value at the virtual vertex 35 can be obtained by performing a measurement at the boundary vertex 38, the value at the virtual vertex 36 can be obtained by measuring at the boundary vertex 39, etc. Now, the values at the vertices 35, 36, 38, 39 are known, and in case these values do fulfill the predefined criterion, the value corresponding to the new virtual vertex 40 can be derived by interpolation. The value at the new vertex 40 can then be used, during a further interpolation process, for deriving the value at the boundary vertex 33. Alternatively, in case said criterion is not fulfilled, the value at the boundary vertex 33 can be measured. It should be clear that by introducing virtual vertices, the interpolation procedure explained above can be extended to boundary vertices.

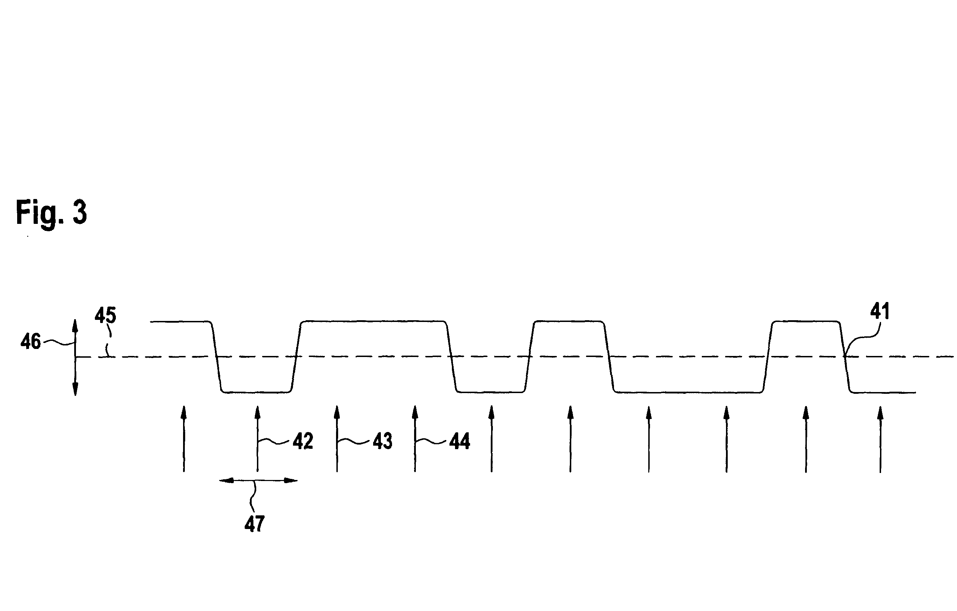

In the following, an application of the invention in the field of chip testing will be explained. Chip testing is only one of a variety of different fields in which the invention can be applied. In Fig. 3, an output signal 41 received from a certain pin of the device under test is shown as a function of time. The output signal 41 can be a predefined pseudo-random bit pattern or any bit pattern generated internally within the chip. Besides that, the output signal 41 might as well be generated, in a self-test mode, by the chip tester itself. The output signal 41 is provided to a receiving channel of the chip tester, and there, said output signal 41 is analyzed. For this purpose, the magnitude of the output signal 41 is determined, in regular time intervals, in accordance with a series of successive receive strobes. For example, at the receive strobe 42, the value "0" is obtained, and at the receive strobes 43, 44, the value "1" is obtained. At each receive strobe, the respective magnitude of the output pattern 41 is digitized by comparing said magnitude with a predefined threshold level 45. In case the respective magnitude at the receive strobe is below the threshold level 45, the digital value "0" is obtained, and in case the magnitude of the output signal 41 at the receive strobe is above the threshold level 45, the digital value "1" is obtained. The threshold level 45 can be varied within an interval 46 of possible threshold levels. Besides that, the timing of the receive strobes relative to the output signal 41 can be varied. For example, the receive strobe 42 may occur at any point of time within the time slots 47 during the transmittal of the digit "0".

In order to obtain a faultless series of digital values, it is necessary to optimize both the threshold level 45 and the timing of the receive strobes. For this purpose, a so-called bit error rate test is performed. The bit error rate is detected as a function of a two-dimensional parameter space, with the first one of said two parameters being the threshold level, and with the second one of said two parameters being the timing of the receive strobes relative to the received output signal. In order to obtain a measurement point of said two-dimensional diagram, both the threshold level and the timing are set to the corresponding values, and then, the output signal is repeatedly received and detected. The detected bit pattern is compared to the predetermined ideal bit pattern. In case of one or more bit errors within the received sequence, a "fail" is identified. After having repeatedly received and detected a large number of output signals, the total number of detected fails is related to the total number of received bit patterns. As a result, a diagram is obtained that shows the number of fails in dependence on the threshold level and on the timing of the receive strobes.

Because of the shape of the diagrams obtained, this type of diagram is often referred to as an "eye diagram". As long as both the threshold level 45 and the timing of the receive strobes lie within the medium range of the respective intervals 46 and 47, the detection can be performed with high accuracy. In this case, the number of fails is equal to zero, or at least close to zero. When the threshold level 45 approaches either the upper limit or the lower limit of the interval 46, it becomes more difficult to distinguish between the zeros and ones of the received bit pattern. Therefore, the detection gets worse, and the number of fails increases. Similarly, when the timing of the receive strobes is moved towards the lower limit or the upper limit of the time slot 47, the obtained value might be disturbed by a rising edge or a falling edge of the output signal 41. The detection becomes more difficult, and the number of fails increases.

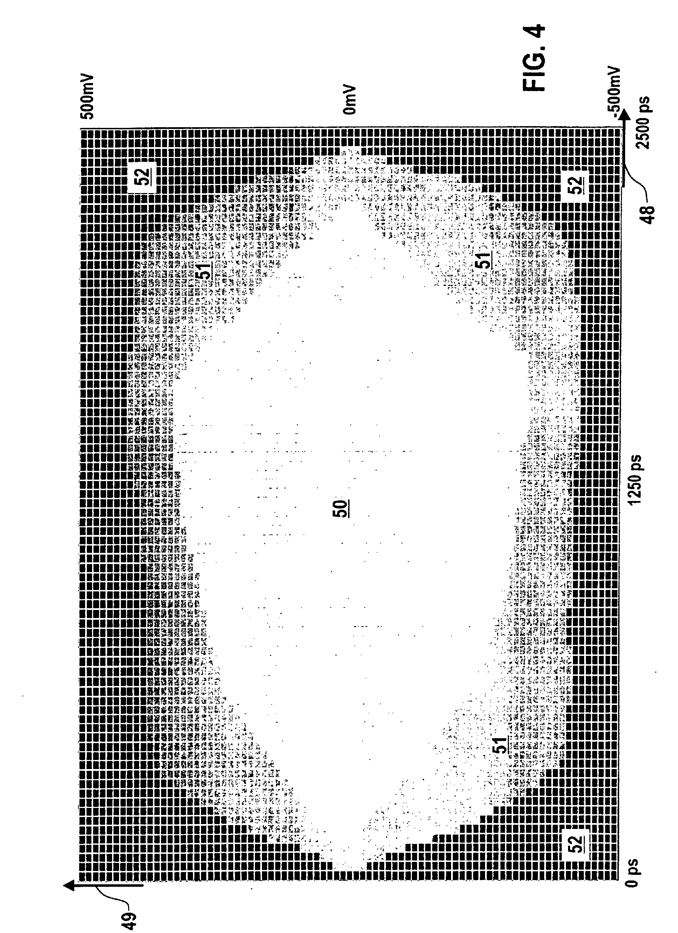

In Figs. 4 to 8 a set of eye diagrams is shown that has been obtained by using the present invention. These diagrams have been acquired in a way that differs from the bit error rate testing as described above. Instead of performing repeated tests for a single one of the pins and summing up the fails, a whole set of pins and their corresponding channels are evaluated in parallel, and the number of channels with a "fail" is determined.

Fig. 4 shows an eye diagram that has been recorded according to the "extensive mode" that has been described above. The first coordinate axis 48 of the two-dimensional parameter space shows the timing of the receive strobes relative to the time slots of the bit pattern. The value t = 1250 ps corresponds to a sampling pulse that occurs right in the middle of a corresponding time slot. On the second coordinate axis 49, the threshold level is depicted, whereby the range of threshold voltages extends from -500 mV to +500 mV.

For each vertex point of a grid representing the two-dimensional parameter space, the corresponding number of fails has to be determined. According to the "extensive mode", a separate measurement of the respective number of fails is performed for each one of the vertices. The number of fails that has been detected for a respective vertex is indicated by the color or the brightness of the small box representing the measurement point: a bright box corresponds to a low number of fails, whereby a dark box corresponds to a large number of fails. The best results lie within the region 50 of the eye diagram. In this region, both the threshold level and the timing of the receive strobes lie within the medium range of the corresponding intervals. When either the threshold level or the timing is moved away from the center position, the number of fails is increased. Therefore, the region 51 indicated with a light gray corresponds to a larger number of fails. The region 52 corresponds to a threshold level that is moved towards -500 mV or towards +500 mV, and to a timing of the receive strobes that is moved towards 0 ps or towards 2500 ps. Within the region 52, the number of failed channels is very high, and the number of fails exceeds the number of output signals that are analyzed correctly.

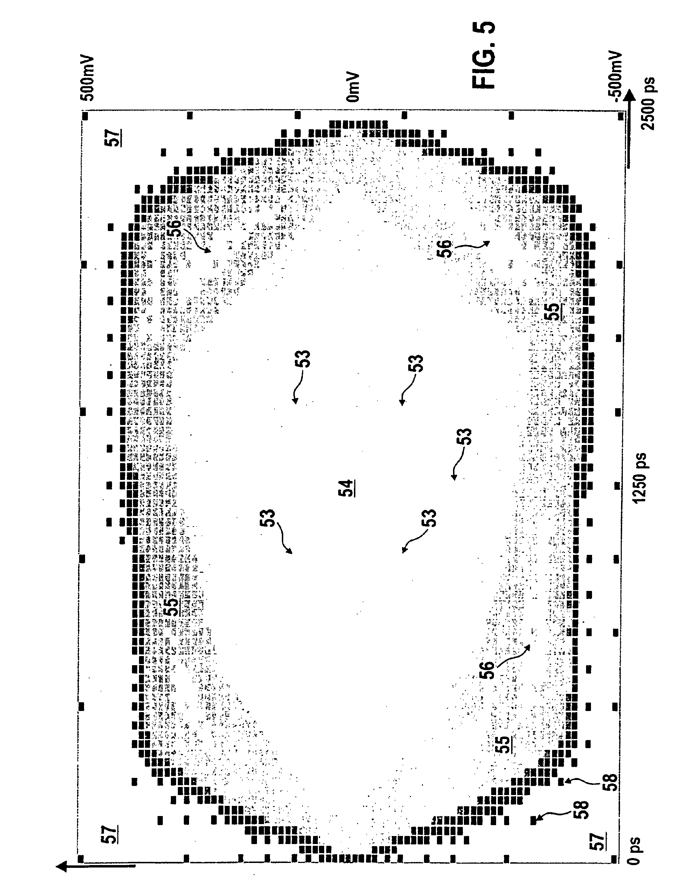

In Fig. 5, it is shown how the eye diagram of Fig. 4 can be determined according to the "optimized mode" that has been described above. According to this mode, the values of the physical property at the vertices of the surrounding cell are compared. In case all these values are identical, the value at the inner point of said cell doesn't have to be measured. Instead, the common value of all the surrounding neighbor vertices can be assigned to said inner vertex. Within the inner region 54, only a few values, for example the values at the vertices 53 of the two-dimensional parameter space, have to be determined by measurement. For most of the other vertices, no measurements have to be performed. In the intermediate region 55, which corresponds to a rising number of fails, the number of fails assumes a well-distributed set of different values. Therefore, only a few measurements, for example in the subregions 56, can be omitted. The region 57 corresponds to the worst detection conditions, and for a lot of vertices, the number of fails assumes its maximum value. Therefore, only a few measurements 58 have to be performed, and a lot of values can be derived by interpolation.

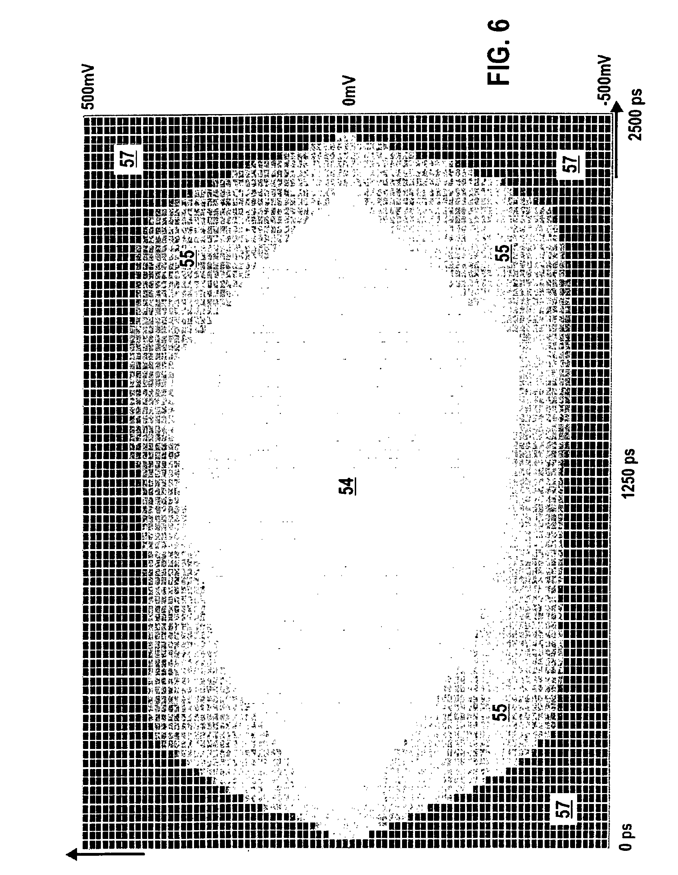

While Fig. 5 only shows the values obtained by measurement, Fig. 6 shows both the values obtained by measurement and the values obtained by interpolation. When comparing Fig. 6 and Fig. 4, it is clear that the reduction of the number of measurements does not considerably impair the quality of the obtained diagram.

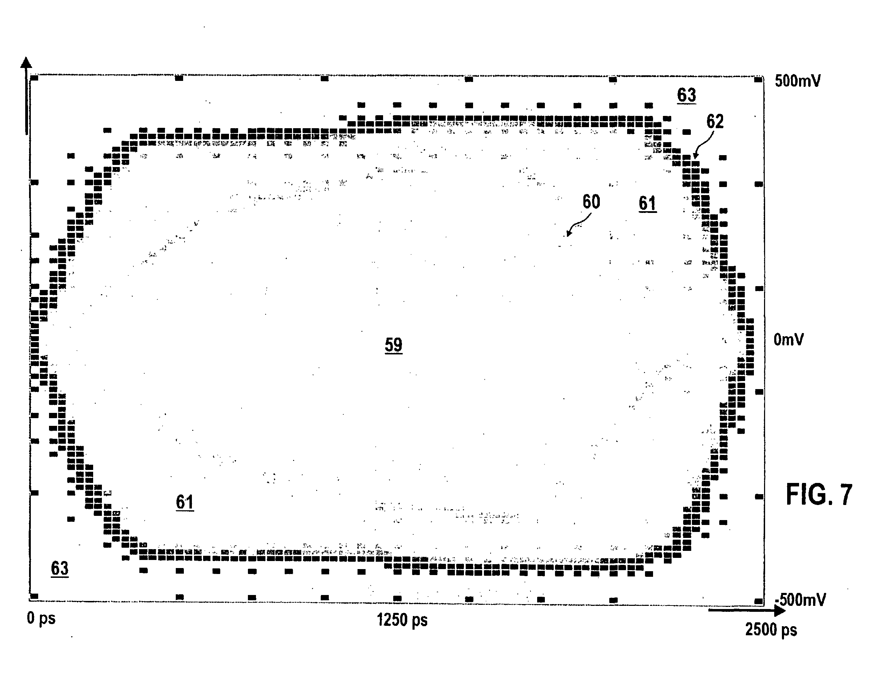

In Fig. 7, an eye diagram is shown that has been determined in accordance with the "contour mode" explained above. For each vertex, it is determined whether the corresponding value of the physical property is a minimum value, an intermediate value or a maximum value. In case the values at the vertices of the surrounding cell are all maximum values, said maximum value is also assigned to an inner vertex of said cell. Similarly, in case the values at the surrounding cell are all minimum values, said minimum value is assigned to the inner point. In case all the values at the vertices of the surrounding cell are intermediate values, the value at the inner vertex is obtained by interpolation, and the arithmetic means of the values at the surrounding vertices is assigned to said inner vertex. According to the "contour mode", only a few measurements are carried out, and the majority of the values of the physical property are determined by interpolation. Most of these measurements are either performed at the contour 60 between the inner region 59 and the intermediate region 61, or at the contour 62 between the intermediate region 61 and the outer region 63. The inner region 59 is the region where the number of fails is substantially equal to zero, whereby in the outer region 63, the number of fails assumes a maximum value.

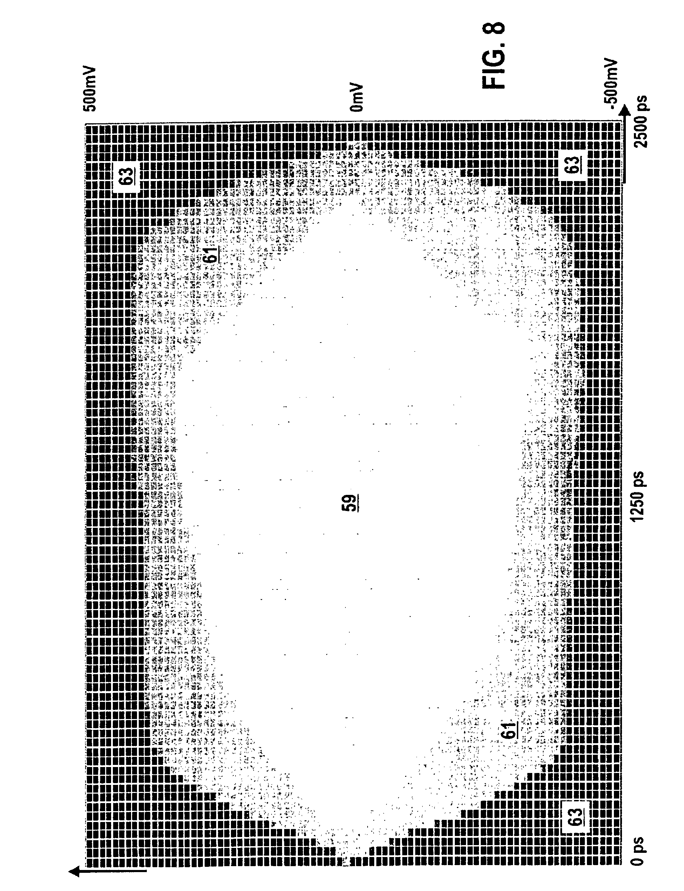

While Fig. 7 only shows the values obtained by measurement, Fig. 8 shows both the values obtained by measurement and the values obtained by interpolation. When comparing Fig. 8 and Fig. 4, it can be seen that the essential features of the eye diagram of Fig. 4 have been preserved, whereby the number of measurements required for obtaining the eye diagram of Fig. 8 has been further reduced.

**Claims**

1. A method for determining a physical property as a function of a n-dimensional domain, with n being a natural number, whereby values (A, B, C, D) of said physical property correspond to vertices (28, 29, 30, 31 ) of a n-dimensional first grid representing the domain, said method comprising the steps of:

   - determining, for a set of cells of said first grid, at least one inner point (32) per cell (27), whereby said inner points, together with the vertices of the first grid, form a respective second grid;

   - determining, for each of said inner points (32), a corresponding value (E) of the physical property at said inner point, whereby in case a predefined criterion is not fulfilled, said value (E) at the inner point is obtained by performing a measurement.

2. The method of claim 1, wherein in case said criterion is fulfilled, said value at the inner point is not obtained by performing a measurement.

3. The method according to claim 1 or any one of the above claims, wherein in case said criterion is fulfilled, said value at the inner point is obtained by interpolation.

4. The method according to claim 1 or any one of the above claims, wherein, in case said value at the inner point is obtained by interpolation, said interpolation is performed with respect to the values of the physical property at the vertices of the cell corresponding to said at least one inner point.

5. The method according to claim 1 or any one of the above claims, wherein the corners of said cells coincide with vertices of said first grid.

6. The method according to claim 1 or any one of the above claims, wherein said cells are elementary cells of said first grid.

7. The method according to claim 1 or any one of the above claims, wherein said inner points are the central points of said cells.

8. The method according to claim 1 or any one of the above claims, wherein said criterion is fulfilled if the variation of the values of the physical property at the vertices of the corresponding cell does not exceed a predefined limit.

9. The method according to claim 1 or any one of the above claims, wherein said criterion is fulfilled if the values of the physical property at the vertices of the corresponding cell are substantially equal to each other.

10. The method according to claim 9, wherein, in case the values at the vertices of the corresponding cell are substantially equal to each other, said value is assigned to the at least one inner point of said cell.

11. The method according to claim 1 or any one of the above claims, comprising a step of determining, for each one of the values at the vertices of the corresponding cell, whether said value is a minimum value, an intermediate value or a maximum value of the range of possible values of said physical property.

12. The method according to claim 11, wherein said criterion is fulfilled

    - if all the values of the physical property at the vertices of the corresponding cell are minimum values, or

    - if all the values of the physical property at the vertices of the corresponding cell are intermediate values, or

    - if all the values of the physical property at the vertices of the corresponding cell are maximum values.

13. The method according to claim 1 or any one of the above claims, wherein the range of possible values of the physical property is partitioned into a set of m sub-intervals, with $m \geq 2$ being a natural number.

14. The method according to claim 13 or any one of the above claims, wherein said criterion is fulfilled if all the values of the physical property at the vertices of the corresponding cell lie within the same sub-interval.

15. The method according to claim 11 or any one of the above claims, wherein, in case said criterion is fulfilled, a mean value of the values at the vertices of the corresponding cell is assigned to the at least one inner point of said cell.

16. The method according to claim 1 or any one of the above claims, wherein for each vertex, a flag is maintained that indicates if the value corresponding to said vertex has been obtained by interpolation or by measurement.

17. The method according to claim 1 or any one of the above claims, wherein a mode of operation can be selected in which, for one or more of the inner points, and irrespective of said criterion, a measurement is performed.

18. The method according to claim 1 or any one of the above claims, wherein said step of determining at least one inner point per cell is carried out at least once in order to refine said first grid.

19. The method according to claim 18 or any one of the above claims, wherein the step of refining the grid is iteratively repeated for a number of times until a predefined resolution is reached.

20. The method according to claim 1 or any one of the above claims, wherein said method is applied for at least one of a group comprising: testing of a device under test - DUT - , chip testing, determining bit error rates.

21. The method according to claim 1 or any one of the above claims, wherein said method is applied for determining an eye diagram, whereby said physical property is the number of fails.

22. The method according to claim 21, wherein said number of fails is determined as a function of a two-dimensional grid, said grid comprising a first coordinate indicating the timing of the measurement pulses, and a second coordinate indicating the threshold voltage used for digitizing received bit streams.

23. A software program or product, preferably stored on a data carrier, for executing the method according to claim 1 or any one of the above claims when run on a data processing system such as a computer or a digital signal processor.

24. An apparatus for determining a physical property as a function of a n-dimensional domain, with n being a natural number, whereby values (A, B, C, D) of said physical property correspond to vertices (28, 29, 30, 31 ) of a n-dimensional first grid representing the domain, said apparatus comprising

    - a grid refinement unit adapted for determining, for a set of cells of said first grid, at least one inner point (32) per cell (27), whereby said inner points, together with the vertices of the first grid, form a respective second grid;

-   an interpolation unit adapted for determining, for each of said inner points (32), a corresponding value (E) of the physical property at said inner point, whereby in case a predefined criterion is not fulfilled, said value (E) at the inner point is obtained by performing a measurement.

**25.** The apparatus of claim 24, said apparatus being adapted for at least one of a group comprising: testing a device under test - DUT -, testing of chips, determining bit error rates.

**26.** A method for determining a physical property as a function of a n-dimensional domain, with n being a natural number, whereby values (A, B, C, D) of said physical property correspond to vertices (28, 29, 30, 31 ) of a n-dimensional first grid representing the domain, said method comprising the steps of:

-   determining, for a set of cells of said first grid, at least one inner point (32) per cell (27), whereby said inner points, together with the vertices of the first grid, form a respective second grid;

-   determining, for each of said inner points (32), a corresponding value (E) of the physical property at said inner point, whereby, in case a predefined criterion is fulfilled, said value (E) at the inner point is obtained by interpolation, and whereby, in case said criterion is not fulfilled, said value (E) at the inner point is obtained by performing a measurement.

## Fig. 1

# Fig. 2

EP 1 376 381 A1

## Fig. 3

FIG. 4

EP 1 376 381 A1

FIG. 5

FIG. 6

FIG. 7

FIG. 8

**European Patent Office**

## PARTIAL EUROPEAN SEARCH REPORT

which under Rule 45 of the European Patent Convention
shall be considered, for the purposes of subsequent
proceedings, as the European search report

**Application Number**

EP 03 10 0308

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 032 910 A (COK DAVID R) 16 July 1991 (1991-07-16) * column 1, line 49 - column 2, line 41 * * column 3, line 7 - column 4, line 47 * --- | 1-26 | G06F17/17 G06T3/40 |
| A | WO 01 63751 A (PERTHOLD RAINER ;ULBRICHT GERALD (DE); FRAUNHOFER GES FORSCHUNG (D) 30 August 2001 (2001-08-30) * page 2, line 15 - page 3, line 16 * * page 3, line 20 - page 4, line 9 * * page 5, line 22 - page 6, line 19 * * page 8, line 15 - page 9, line 32 * * page 10, line 10 - page 11, line 6 * --- | 1-26 | |
| A | GB 2 355 377 A (CTX OPTO ELECTRONICS CORP) 18 April 2001 (2001-04-18) * page 2, line 25 - page 4, line 1 * * page 7, line 3 - page 8, line 11 * * page 9, line 18 - page 10, line 15 * * page 12, line 18 - page 15, line 8 * --- -/-- | 1-26 | |

TECHNICAL FIELDS
SEARCHED       (Int.Cl.7)

G06F
G06T

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 27 August 2003 | Barba, M |

EPO FORM 1503 03.82 (P04C07)

**European Patent Office**

**INCOMPLETE SEARCH SHEET C**

Application Number

EP 03 10 0308

Claim(s) searched completely:
      1, 2, 24, 25, 26

Claim(s) searched incompletely:
      3-23

Reason for the limitation of the search:

Present claims 3 to 23 relate to an extremely large number of possible methods. In fact, the claims contain so many options and possible permutations that a lack of clarity and conciseness within the meaning of Article 84 EPC arises to such an extent as to render a meaningful search of the claims impossible. Consequently, the search has been carried out for those parts of the application which do appear to be clear and concise, namely the search has been carried out without considering all the dependency relationships deriving by the wording "or any one of the above claims".

**European Patent Office**

## PARTIAL EUROPEAN SEARCH REPORT

Application Number

EP 03 10 0308

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| A | US 5 481 275 A (KHUBCHANDANI TEJU J ET AL) 2 January 1996 (1996-01-02)<br>* column 5, line 45 - column 6, line 63 *<br>* column 9, line 32 - column 14, line 49 *<br>* column 15, line 9 - column 16, line 31 *<br>--- | 1-26 | |
| A | US 5 991 464 A (HSU POHSIANG ET AL) 23 November 1999 (1999-11-23)<br>* column 2, line 50 - line 53 *<br>* column 3, line 1 - line 49 *<br>* column 4, line 57 - column 6, line 9 *<br>* column 8, line 11 - column 12, line 11 *<br>* column 12, line 16 - column 13, line 6 *<br>--- | 1-26 | |
| A | EP 0 696 017 A (HEWLETT PACKARD CO) 7 February 1996 (1996-02-07)<br>* page 2, line 33 - line 40 *<br>* page 4, line 13 - page 5, line 29 *<br>* page 6, line 16 - page 8, line 30 *<br>--- | 1-26 | |
| A | US 6 480 232 B1 (WESTON MARTIN ET AL) 12 November 2002 (2002-11-12)<br>* column 1, line 52 - line 55 *<br>* column 3, line 30 - column 4, line 21 *<br>* column 4, line 62 - column 5, line 22 *<br>--- | 1-26 | |
| A | US 6 421 084 B1 (PAN DAVIS ET AL) 16 July 2002 (2002-07-16)<br>* column 3, line 1 - line 60 *<br>--- | 1-26 | |
| A | EP 0 949 586 A (SEIKO EPSON CORP) 13 October 1999 (1999-10-13)<br>* page 3, line 45 - page 4, line 1 *<br>* page 5, line 3 - page 6, line 46 *<br>* page 11, line 54 - page 12, line 44 *<br>----- | 1-26 | |

TECHNICAL FIELDS SEARCHED (Int.Cl.7)

EPO FORM 1503 03.82 (P04C10)

## ANNEX TO THE EUROPEAN SEARCH REPORT
## ON EUROPEAN PATENT APPLICATION NO.          EP 03 10 0308

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2003

| Patent document cited in search report | | Publication date | Patent family member(s) | | Publication date |
|---|---|---|---|---|---|
| US 5032910 | A | 16-07-1991 | DE | 69016402 D1 | 09-03-1995 |
| | | | DE | 69016402 T2 | 30-04-1997 |
| | | | EP | 0446329 A1 | 18-09-1991 |
| | | | JP | 4502096 T | 09-04-1992 |
| | | | WO | 9105440 A1 | 18-04-1991 |
| WO 0163751 | A | 30-08-2001 | WO | 0163751 A1 | 30-08-2001 |
| | | | AU | 3160200 A | 03-09-2001 |
| | | | EP | 1258078 A1 | 20-11-2002 |
| GB 2355377 | A | 18-04-2001 | NONE | | |
| US 5481275 | A | 02-01-1996 | US | 6191772 B1 | 20-02-2001 |
| US 5991464 | A | 23-11-1999 | NONE | | |
| EP 0696017 | A | 07-02-1996 | US | 5627953 A | 06-05-1997 |
| | | | DE | 69522158 D1 | 20-09-2001 |
| | | | DE | 69522158 T2 | 29-11-2001 |
| | | | EP | 0696017 A2 | 07-02-1996 |
| | | | JP | 8063592 A | 08-03-1996 |
| US 6480232 | B1 | 12-11-2002 | AU | 702050 B2 | 11-02-1999 |
| | | | AU | 1541895 A | 21-08-1995 |
| | | | AU | 2807599 A | 01-07-1999 |
| | | | CA | 2182277 A1 | 10-08-1995 |
| | | | DE | 69524420 D1 | 17-01-2002 |
| | | | DE | 69524420 T2 | 01-08-2002 |
| | | | EP | 0775421 A1 | 28-05-1997 |
| | | | WO | 9521505 A1 | 10-08-1995 |
| | | | JP | 9508512 T | 26-08-1997 |
| | | | US | 5734435 A | 31-03-1998 |
| US 6421084 | B1 | 16-07-2002 | NONE | | |
| EP 0949586 | A | 13-10-1999 | EP | 0949586 A2 | 13-10-1999 |
| | | | JP | 3063754 B2 | 12-07-2000 |
| | | | JP | 2000032256 A | 28-01-2000 |
| | | | US | 6510254 B1 | 21-01-2003 |
| | | | US | 2003081225 A1 | 01-05-2003 |
| | | | EP | 0999696 A1 | 10-05-2000 |
| | | | JP | 2000209435 A | 28-07-2000 |
| | | | WO | 9955073 A1 | 28-10-1999 |
| | | | JP | 2000299780 A | 24-10-2000 |

EPO FORM P0459

For more details about this annex : see Official Journal of the European Patent Office, No. 12/82